# EUROPÄISCHE PATENTSCHRIFT

(11) **EP 2 361 706 B1**
(45) Veröffentlichungstag und Bekanntmachung des Hinweises auf die Patenterteilung: **02.04.2014**
(21) Anmeldenummer: 11155024.0
(22) Anmeldetag: 18.02.2011
(51) Int. Cl.: B24B 5/36, B23B 5/32, B24B 5/46, B60B 17/00, B24B 19/00

(54) **Bearbeitungseinrichtung zur Bearbeitung der Gleiskontaktfläche eines Schienenrades**
Processing system for processing the track contact surface of a guide rail wheel
Dispositif de traitement pour le traitement de la surface de contact de rail d'une roue de véhicule sur rails

(30) Priorität: 18.02.2010 DE 102010008539
(43) Veröffentlichungstag der Anmeldung: 31.08.2011
(73) Patentinhaber: Bombardier Transportation GmbH, 10785 Berlin (DE)
(72) Erfinder: Polach, Oldrich, 8212, Neuhausen am Rheinfall (CH); Vögeli, Martin, 8493, Saland (CH)
(74) Vertreter: Cohausz & Florack

(56) Entgegenhaltungen:
- US-A- 1 633 885
- US-A- 1 967 835
- US-A- 2 575 212
- US-A- 2 664 679
- US-A- 3 007 290

## Beschreibung

Die vorliegende Erfindung betrifft eine Bearbeitungseinrichtung zur Bearbeitung der Gleiskontaktfläche eines Schienenrades eines Schienenfahrzeugs im Betrieb des Schienenfahrzeugs mit einem Kontaktkörper gemäß dem Oberbegriff des Anspruchs 1. Der Kontaktkörper ist dazu ausgebildet, die Gleiskontaktfläche in einem Betriebszustand über eine Bearbeitungsfläche flächig zu kontaktieren, wobei die Bearbeitungsfläche einen Laufflächenbearbeitungsabschnitt aufweist, der einen Laufflächenabschnitt der Gleiskontaktfläche in dem Betriebszustand flächig kontaktiert, und der Laufflächenbearbeitungsabschnitt insbesondere einer Soll-Geometrie des Laufflächenabschnitts entsprechend gestaltet ist. Die Erfindung betrifft weiterhin ein Schienenfahrzeug mit einer erfindungsgemäßen Bearbeitungseinrichtung sowie ein Verfahren zur Bearbeitung der Gleiskontaktfläche eines Schienenrades.

Bei modernen Schienenfahrzeugen führt die immer weiter vorangetriebene hohe Kraftschlussausnutzung der meist sehr leistungsstarken Traktionsfahrzeuge unter schlechten Adhäsionsbedingungen (beispielsweise bei Schnee und Eis) zwischen Rad und Schiene unter anderem zu einem stark erhöhten Verschleiß der Radlauffläche der Schienenräder. Insbesondere in Ländern mit entsprechend ungünstigen Witterungsbedingungen (lange Winter- oder Nässeperioden) kommt dieser Nachteil besonders drastisch zum Tragen.

Häufig werden zudem zusätzliche Maßnahmen zur Steigerung der Zugkraft ergriffen. So ist es hierzu beispielsweise bekannt, vergleichsweise hohe Schlupfwerte (zwischen Rad und Schiene) zuzulassen sowie reibungserhöhende Mittel (beispielsweise Sand) in den Kontaktbereich zwischen Rad und Schiene einzubringen (so genanntes Sanden). Ebenso ist es bekannt, zu diesem Zweck eine (gegebenenfalls ohnehin vorhandene) Klotzbremse als so genannte Putzbremse zum so genannten Putzen oder Erwärmen der Lauffläche oder als so genannte Schleuderbremse zur Reduktion der Rotationsbeschleunigung der Radeinheit (also beispielsweise eines Radpaares oder eines Radsatzes) zu verwenden. Alle diese Maßnahmen bringen jedoch einen noch weiter erhöhten Verschleiß der Lauffläche mit sich.

Dieser erhöhte Verschleiß der Lauffläche führt insbesondere in Verbindung mit einem höchstens mäßigen Verschleiß am Spurkranz dazu, dass der Grenzwert der Spurkranzdicke schon nach einer relativ kurzen Laufleistung erreicht wird und eine Erneuerung des Radprofils (so genannte Reprofilierung) nötig wird. Außerdem führt die durch den Verschleiß erhöhte Krümmung der Lauffläche zu einer hohen äquivalenten Konizität, was ebenfalls eine Erneuerung des Radprofils schon nach einer relativ kurzen Laufleistung notwendig macht. Der Verschleiß durch den Klotz einer Putzbremse bzw. Erwärmungsbremse bzw. Schleuderbremse, welche unter ungünstigen Adhäsionsbedingungen zwischen Rad und Schiene möglicherweise sehr oft zum Einsatz kommt, erhöht gegebenenfalls die Krümmung der Lauffläche zusätzlich und trägt somit zur Zunahme der äquivalenten Konizität mit den geschilderten Nachteilen bei.

Insbesondere für kleinere Schienenfahrzeugbetreiber, die keine eigene Instandhaltungsinfrastruktur für die Reprofilierung besitzen, wie sie beispielsweise aus der US 1,633,885 und der US 2,575,212 bekannt ist, ist die Reprofilierung mit einem vergleichsweise hohen Aufwand verbunden. So muss das Fahrzeug beispielsweise zum nächsten, verfügbaren Standort mit den entsprechenden Einrichtungen gebracht werden oder es muss eine mobile Anlage herangeschafft werden. Dies verursacht Kosten und reduziert die Verfügbarkeit der Fahrzeuge.

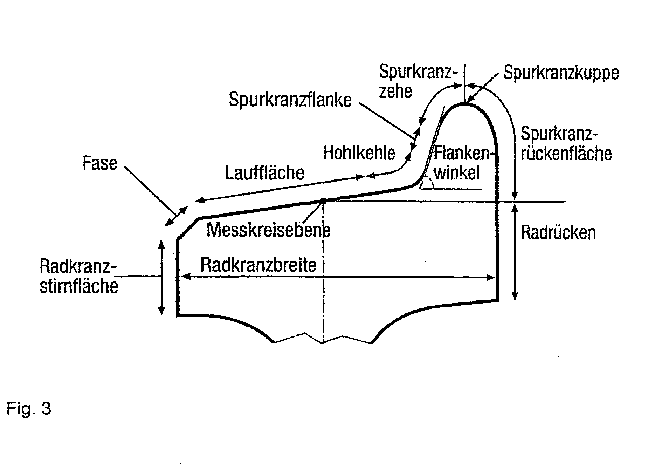

Um den Verschleiß des Schienenrades hauptsächlich im Bereich des Spurkranzes und teilweise der Hohlkehle (also dem Übergang zwischen der Lauffläche und dem Spurkranz; siehe Figur 3) zu reduzieren, werden häufig geeignete Einrichtungen eingebaut, um den Spurkranz zu schmieren. Diese Spurkranzschmierung bringt jedoch zum einen eine Verunreinigung am Fahrzeug und der Infrastruktur mit sich. Zudem setzt das verwendete Schmiermittel sobald es in den Kontaktbereich zwischen Lauffläche und Schiene gelangt naturgemäß die Reibung und damit übertragbare Traktionsleistung herab.

Aus der US 3,007,290 ist eine gattungsgemäße Bearbeitungseinrichtung bekannt, bei welcher wiederum von Zeit zu Zeit in einem Wartungsbetrieb ein herkömmlicher Bremsklotz des Schienenfahrzeugs in einem durch einen abrasiv wirkenden, reprofilierenden Kontaktkörper ersetzt werden muss. In dem Wartungsbetrieb wird dann der Kontaktkörper so lange gegen das Schienenrad gedrückt, bis die Soll-Geometrie von Lauffläche und Spurkranz wiederhergestellt ist.

Aus der US 2,664,679 und der US 1,967,835 A sind weiterhin gattungsgemäße Bearbeitungseinrichtungen bekannt, bei denen abrasiv wirkende, reprofilierende Kontaktkörper im Betrieb des Schienenfahrzeugs dauerhaft mit einer vorgegebenen Kontaktkraft gegen das Schienenrad gedrückt werden. Durch die permanente abrasive Bearbeitung des Schienenrades erhöht sich dessen Materialverlust im normalen Betrieb erheblich.

Der vorliegenden Erfindung liegt daher die Aufgabe zu Grunde, ein Schienenfahrzeug, ein Bearbeitungsverfahren bzw. eine Bearbeitungseinrichtung der eingangs genannten Art zur Verfügung zu stellen, welches bzw. welche die oben genannten Nachteile nicht oder zumindest in geringerem Maße mit sich bringt und insbesondere auf einfache Weise günstige Traktionsbedingungen bei verbessertem Verschleißverhalten ermöglicht bzw. eine frühzeitige Reprofilierung vermeidet.

Die vorliegende Erfindung löst diese Aufgabe ausgehend von einer Bearbeitungseinrichtung gemäß dem Oberbegriff des Anspruchs 1 durch die im kennzeichnenden Teil des Anspruchs 1 angegebenen Merkmale. Sie löst diese Aufgabe weiterhin ausgehend von einem Bearbeitungsverfahren gemäß dem Oberbegriff des Anspruchs 12 durch die im kennzeichnenden Teil des Anspruchs 12 angegebenen Merkmale.

Der vorliegenden Erfindung liegt die technische Lehre zu Grunde, dass man auf einfache Weise günstige Traktionsbedingungen bei verbessertem Verschleißverhalten ermöglicht, wenn während des Betriebs des Schienenfahrzeugs (abhängig von vorgebbaren zeitlichen oder nicht-zeitlichen Ereignissen) nicht nur die Lauffläche des Schienenrades sondern auch dessen Spurkranz mit einem Kontaktkörper bearbeitet wird. Hierdurch ist es möglich, zumindest in den für die Betriebsbereitschaft des Schienenrades relevanten Bereichen des Schienenrades eine Soll-Geometrie bzw. eine nominelle Geometrie der Gleiskontaktfläche des Schienenrades zumindest im Wesentlichen aufrecht zu erhalten. Durch diese zumindest weit gehende Aufrechterhaltung der Soll-Geometrie des Schienenrades werden zum einen die oben beschriebenen, den Verschleiß noch weiter verstärkenden Verschleißbilder bzw. Verschleißmechanismen vermieden bzw. in gewissen Abständen kompensiert, sodass sich insgesamt ein verbessertes Verschleißverhalten mit längeren Standzeiten bzw. höheren Laufleistungen des Schienenrades ergeben. Zudem wird durch die Bearbeitung der Lauffläche die Adhäsion zwischen Rad und Schiene durch das Putzen und Erwärmen der Lauffläche erhöht und somit das Traktionsverhalten unter ungünstigen Adhäsionsbedingungen (Feuchte, Schnee, Eis) verbessert.

Die Erfindung erlaubt mit anderen Worten die Erneuerung (zumindest der relevanten Teile) des Radprofils nach Bedarf während des normalen Betriebes des Fahrzeugs. Somit entfallen bzw. reduzieren sich die Kosten für die Reprofilierung und die Verfügbarkeit der Fahrzeuge wird erhöht. Außerdem ermöglicht die Erfindung, die Korrektur der Form des Radprofils mit der Erhöhung der Adhäsion zu vereinen, sodass sich diese Wirkungen gegenseitig unterstützen. Somit kann der Zielkonflikt zwischen hohen Traktionsleistungen und geringen Laufleistungen zwischen den Reprofilierungen unter ungünstigen Adhäsionsbedingungen (Feuchte, Schnee, Eis) entschärft werden.

Gemäß einem ersten Aspekt betrifft die vorliegende Erfindung daher eine Bearbeitungseinrichtung zur Bearbeitung der Gleiskontaktfläche eines Schienenrades eines Schienenfahrzeugs im Betrieb des Schienenfahrzeugs mit einem Kontaktkörper, wobei der Kontaktkörper dazu ausgebildet ist, die Gleiskontaktfläche in einem Betriebszustand über eine Bearbeitungsfläche flächig zu kontaktieren. Die Bearbeitungsfläche weist einen Laufflächenbearbeitungsabschnitt auf, der einen Laufflächenabschnitt der Gleiskontaktfläche in dem Betriebszustand flächig kontaktiert, wobei der Laufflächenbearbeitungsabschnitt insbesondere einer Soll-Geometrie des Laufflächenabschnitts entsprechend gestaltet ist. Weiterhin weist die Bearbeitungsfläche einen Spurkranzbearbeitungsabschnitt auf, der im Bereich eines Spurkranzes des Schienenrades einen Spurkranzabschnitt der Gleiskontaktfläche in dem Betriebszustand flächig kontaktiert, wobei der Spurkranzbearbeitungsabschnitt einer Soll-Geometrie des Spurkranzabschnitts entsprechend gestaltet ist.

Es kann vorgesehen sein, dass der Laufflächenbearbeitungsabschnitt und/oder der Spurkranzbearbeitungsabschnitt nur den für die Betriebsbereitschaft des Schienenrades relevanten Teil der Gleiskontaktfläche überdeckt. Mithin können also irrelevante oder gegebenenfalls weniger kritische Bereiche des Radprofils unbearbeitet bleiben, ohne dass es zu einer nennenswerten Verschlechterung der Ergebnisse kommt. Vorzugsweise ist vorgesehen, dass sich der Laufflächenbearbeitungsabschnitt in dem Betriebszustand in einer die Rotationssymmetrieachse des Schienenrades enthaltenden Ebene im Wesentlichen über wenigstens 70% des Laufflächenabschnitts, vorzugsweise über wenigstens 90% des Laufflächenabschnitts, weiter vorzugsweise über im Wesentlichen 100% des Laufflächenabschnitts, erstreckt. Zusätzlich und alternativ erstreckt sich der Spurkranzbearbeitungsabschnitt in dem Betriebszustand in einer die Rotationssymmetrieachse des Schienenrades enthaltenden Ebene bevorzugt im Wesentlichen über wenigstens 70% des Spurkranzabschnitts, vorzugsweise über wenigstens 90% des Spurkranzabschnitts, weiter vorzugsweise über im Wesentlichen 100% des Spurkranzabschnitts.

Der Laufflächenbearbeitungsabschnitt und der Spurkranzbearbeitungsabschnitt können grundsätzlich in beliebiger Weise zueinander angeordnet sein. Insbesondere können sie voneinander beabstandet sein. Vorzugsweise grenzen der Laufflächenbearbeitungsabschnitt und der Spurkranzbearbeitungsabschnitt aneinander im Bereich eines Übergangsabschnitts an, wobei der Übergangsabschnitt einer Soll-Geometrie der Gleiskontaktfläche in einem Übergang zwischen dem Laufflächenabschnitt und dem Spurkranzabschnitt (also im Bereich der so genannten Hohlkehle) entsprechend gestaltet ist. In vorteilhafter Weise wird damit auch der Übergang zwischen Lauffläche und Spurkranz in die Bearbeitung miteinbezogen.

Die Bearbeitung des Spurkranzes kann sich lediglich auf die im Betrieb genutzte Gleiskontaktfläche (z. B. Hohlkehle und Spurkranzflanke) beschränken (also auf den Teil des Spurkranzes, der im Betrieb die Schiene kontaktiert). Es kann jedoch auch Spurkranzkuppe (am Außenumfang) des Spurkranzes sowie die Spurkranzrückenfläche (auf der Radinnenseite) des Spurkranzes bearbeitet werden. Vorzugsweise weist die Bearbeitungsfläche daher einen Kuppenbearbeitungsabschnitt auf, wobei der Kuppenbearbeitungsabschnitt in dem Betriebszustand einen Kuppenbereich an einem Außenumfang des Spurkranzes in einer die Rotationssymmetrieachse des Schienenrades enthaltenden Ebene umgreift. Neben der vorteilhaften Bearbeitung der Spurkranzkuppe hat dieses Umgreifen des Spurkranzes auch den vorteilhaften Effekt einer Zentrierung bzw. Führung des Kontaktkörpers in der Axialrichtung des Schienenrades (also in einer Richtung parallel zu der Drehachse des Schienenrades).

Zudem wird durch das Umgreifen bei einem Spurkranz, bei dem ein durch den Kontaktkörper kontaktierter Abschnitt zu der Radialrichtung des Schienenrades geneigt verläuft, automatisch eine Kontaktkraft in Axialrichtung erzeugt, sodass es gegebenenfalls ausreicht, dass der Kontaktkörper lediglich mit einer in Radialrichtung des Schienenrades gerichteten Kraft gegen das Schienenrad gedrückt wird.

Der Kuppenbearbeitungsabschnitt kann grundsätzlich auf beliebige geeignete Weise gestaltet sein. Vorzugsweise kontaktiert der Kuppenbearbeitungsabschnitt den Spurkranz flächig, wobei er bevorzugt einer Soll-Geometrie des Spurkranzes in dem Kuppenbereich entsprechend gestaltet ist, sodass auch in diesem Bereich die Soll-Geometrie des Schienenrades im Wesentlichen erhalten bleibt.

Der Kontaktkörper kann grundsätzlich aus beliebigen geeigneten Materialien gestaltet sein, welche eine ausreichend lange Standzeit des Kontaktkörpers bei ausreichender Bearbeitungswirkung der Gleiskontaktfläche gewährleisten. Vorzugsweise umfasst der Kontaktkörper zumindest im Bereich der Bearbeitungsfläche ein hoch abrasives Material, um mit vergleichsweise geringen Kontaktkräften bereits eine ausreichende Bearbeitung der Gleiskontaktfläche zu gewährleisten. Der Kontaktkörper kann weiterhin einteilig gestaltet sein. Insbesondere bei Varianten mit einem Spurkranzbearbeitungsabschnitt ist der Kontaktkörper bevorzugt im Bereich der Bearbeitungsfläche mehrteilig gestaltet, da sich hierdurch seine Herstellung vereinfacht.

Die Führung des Kontaktkörpers relativ zu dem Schienenrad kann grundsätzlich alleine über die Bearbeitungsfläche erfolgen. Bei bestimmten Varianten der Erfindung ist jedoch vorgesehen, dass mit dem Kontaktkörper zur Führung relativ zu dem Schienenrad wenigstens ein, insbesondere federnd gelagertes, Führungselement mit einem Gleitstück verbunden, wobei das wenigstens eine Führungselement zum Zusammenwirken seines Gleitstücks mit einer Radkranzstirnfläche des Schienenrads und/oder einem Radrücken des Schienenrads ausgebildet ist. Hierdurch kann insbesondere gewährleistet werden, dass der Kontaktkörper dank des beim Aufsetzen auf das Schienenrad frühzeitig wirksamen Führungselements stets an der korrekten Position aufgesetzt wird.

Erfindungsgemäß ist eine Betätigungseinheit vorgesehen, die dazu ausgebildet ist, den Kontaktkörper in dem Betriebszustand mit dem Schienenrad in Kontakt zu bringen und eine, insbesondere vorgebbare, Kontaktkraft zwischen dem Kontaktkörper und dem Schienenrad zu erzeugen.

Die Kontaktkraft weist vorzugsweise zumindest eine, insbesondere vorgebbare, Radialkomponente in Radialrichtung des Schienenrades auf, um eine ausreichende Bearbeitung der Gleiskontaktfläche zumindest in dem Laufflächenabschnitt (und, wie oben beschrieben, gegebenenfalls auch in dem Spurkranzabschnitt) sicherzustellen. Zusätzlich oder alternativ weist die Kontaktkraft zumindest eine, insbesondere vorgebbare, Axialkomponente in Axialrichtung des Schienenrades auf, um eine ausreichende Bearbeitung in dem Spurkranzabschnitt sicherzustellen.

Der Betrag der Kontaktkraft ist vorzugsweise so gewählt, dass sich eine für die zuverlässige Bearbeitung der Gleiskontaktfläche ausreichende Flächenpressung ergibt. Hierbei wird vorzugsweise eine vergleichsweise geringe Flächenpressung gewählt, welche im Betrieb des Schienenfahrzeugs insbesondere kein nennenswertes Bremsmoment erzeugt. Vorzugsweise ist die Kontaktkraft so gewählt, dass die in dem Betriebszustand durch den Kontaktkörper erzeugte Bremsleistung höchstens 20%, vorzugsweise höchstens 10%, weiter vorzugsweise höchstens 5%, der auf das einzelne Schienenrad bezogenen nominellen Bremsleistung der Bremsanlage des Schienenfahrzeugs beträgt.

Erfindungsgemäß weist die Betätigungseinheit eine Betätigungssteuereinheit zur Steuerung der Betätigung des Kontaktkörpers auf, wobei die Betätigungssteuereinheit dazu ausgebildet ist, Beginn und/oder Dauer und/oder Ende der Betätigung des Kontaktkörpers in Abhängigkeit von zeitlichen und/oder nicht-zeitlichen Ereignissen zu bestimmen. Hierbei können beliebige zeitliche und/oder nicht-zeitliche Ereignisse relevant sein. Als zeitliches Ereignis kann beispielsweise der Ablauf eines bestimmten (vorgebbaren) Zeitintervalls verwendet werden, der ein erneutes Betätigen des Kontaktkörpers bzw. das Ende einer Betätigung des Kontaktkörpers auslöst. Als nicht-zeitliches Ereignis kann beispielsweise das manuelle Eingeben eines Startsignals allein oder zusammen mit der Einstellung einer beliebigen Betätigungsdauer direkt in die Betätigungssteuereinheit oder via Fahrzeugsteuerung genannt werden oder das Auftreten eines bestimmten Steuersignals aus der Fahrzeugsteuerung verwendet werden. So kann beispielsweise ein Signal einer Kraftschlussregelung des Fahrzeugs für die Regelung des Kraftschlusses oder des Antriebsmoments zwischen Rad und Schiene genutzt werden, um ein Betätigen des Kontaktkörpers bzw. das Ende einer Betätigung des Kontaktkörpers auszulösen.

Erfindungsgemäß ist die Betätigungssteuereinheit dazu ausgebildet, Beginn und/oder Dauer und/oder Ende der Betätigung des Kontaktkörpers in Abhängigkeit von einem der Steuereinheit zugeführten Signal eines Kraftschlussreglers einer Antriebsregelung des Schienenfahrzeugs (beispielsweise zur Regelung des Antriebsmoments) zu bestimmen. Das Signal kann ein Schlupfsignal sein, das für einen im Betrieb des Schienenfahrzeugs auftretenden Schlupf zwischen dem Schienenrad und einer befahrenen Schiene repräsentativ ist. Hiermit ist es beispielsweise möglich, die Betätigung des Kontaktkörpers an das aktuell vorliegende Signal des Kraftschlussreglers bzw. an den aktuell vorliegenden Schlupf am Schienenrad zu koppeln.

Vorzugsweise ist die Betätigungssteuereinheit dazu ausgebildet, Beginn und/oder Dauer und/oder Ende der Betätigung des Kontaktkörpers in Abhängigkeit von der Überschreitung eines, insbesondere vorgebbaren, Grenzwertes der Regelgrößen des Kraftschlussreglers bzw. eines, insbesondere vorgebbaren, Schlupfgrenzwertes zu bestimmen. So kann beispielsweise vorgesehen sein, dass die Betätigung des Kontaktkörpers ausgelöst wird, sobald der Schlupfgrenzwert überschritten ist. Ebenso kann vorgesehen sein, dass die Betätigung (insbesondere nach Ablauf eines vorgebbaren Zeitintervalls) nach einem Unterschreiten des Schlupfgrenzwerts wieder beendet wird.

Vorzugsweise weist die Betätigungseinheit eine Protokolliereinrichtung auf, wobei die Protokolliereinrichtung dazu ausgebildet ist, Beginn und/oder Dauer und/oder Ende der Betätigung des Kontaktkörpers und/oder wenigstens eine für die Kontaktverhältnisse, insbesondere die Kontaktkraftverhältnisse, während der Betätigung des Kontaktkörpers repräsentative Größe zu protokollieren. Hiermit ist es in vorteilhafter Weise möglich, die im Betrieb durch die Bearbeitungseinrichtung erfolgte Bearbeitung des Schienenrades nachzuvollziehen und anhand dieser Daten gegebenenfalls eine Prognose über die verbleibende Standzeit des Schienenrades vorzunehmen.

Die vorliegende Erfindung betrifft weiterhin ein Schienenfahrzeug mit einem Fahrwerk, das ein Schienenrad umfasst, und einer dem Schienenrad zugeordneten erfindungsgemäßen Bearbeitungseinrichtung. Vorzugsweise ist eine dem Schienenrad zugeordnete Betriebsbremseinrichtung mit einer Bremssteuereinheit zur Steuerung des Abbremsens des Schienenfahrzeugs vorgesehen, während die Bearbeitungseinrichtung eine Betätigungseinheit mit einer Betätigungssteuereinheit zur Steuerung der Betätigung des Kontaktkörpers aufweist. Die Bremssteuereinheit ist mit der Betätigungssteuereinheit verbunden und dazu ausgebildet, in Abhängigkeit von einem Betätigungssignal der Betätigungssteuereinheit eine Bremsleistung der Betriebsbremseinrichtung einzustellen, insbesondere die Bremsleistung bei Betätigung des Kontaktkörpers, insbesondere um einen vorgebbaren Betrag, zu reduzieren. Hiermit ist auch bei paralleler Betätigung der Bearbeitungseinrichtung eine bedarfsgerechte Einstellung der Bremsleistung möglich.

Bei weiteren Ausführungsformen der Erfindung ist die Betätigungssteuereinheit dazu ausgebildet, in Abhängigkeit von einem Bremssignal der Bremssteuereinheit Beginn und/oder Dauer und/oder Ende einer Betätigung des Kontaktkörpers zu bestimmen. So kann beispielsweise vorgesehen sein, dass die Betätigung des Kontaktkörpers stets parallel zur Betriebsbremsung erfolgt. Bei anderen Varianten der Erfindung kann jedoch auch vorgesehen sein, dass bei Vorliegen des Bremssignals eine Betätigung des Kontaktkörpers abgebrochen wird.

Die vorliegende Erfindung betrifft weiterhin ein Verfahren zur Bearbeitung der Gleiskontaktfläche eines Schienenrades eines Schienenfahrzeugs im Betrieb des Schienenfahrzeugs, bei dem ein Kontaktkörper die Gleiskontaktfläche in einem Betriebszustand über eine Bearbeitungsfläche flächig mit einer, insbesondere vorgebbaren, Kontaktkraft kontaktiert, wobei die Bearbeitungsfläche einen Laufflächenbearbeitungsabschnitt aufweist, der einen Laufflächenabschnitt der Gleiskontaktfläche in dem Betriebszustand flächig kontaktiert, und der Laufflächenbearbeitungsabschnitt insbesondere einer Soll-Geometrie des Laufflächenabschnitts entsprechend gestaltet ist. Die Bearbeitungsfläche weist einen Spurkranzbearbeitungsabschnitt auf, der im Bereich eines Spurkranzes des Schienenrades einen Spurkranzabschnitt der Gleiskontaktfläche in dem Betriebszustand flächig kontaktiert, wobei der Spurkranzbearbeitungsabschnitt einer Soll-Geometrie des Spurkranzabschnitts entsprechend gestaltet ist. Der Beginn und/oder die Dauer und/oder das Ende der Betätigung des Kontaktkörpers wird in Abhängigkeit von zeitlichen und/oder nicht-zeitlichen Ereignissen bestimmt. Weiterhin wird der Beginn und/oder die Dauer und/oder das Ende der Betätigung des Kontaktkörpers in Abhängigkeit von einem im Betrieb des Schienenfahrzeugs auftretenden Steuersignal eines Kraftschlussreglers einer Antriebsregelung des Schienenfahrzeugs bestimmt. Hiermit lassen sich die oben im Zusammenhang mit der erfindungsgemäßen Bearbeitungseinrichtung bzw. dem erfindungsgemäßen Fahrzeug beschriebenen Varianten und Vorteile in demselben Maße erzielen, sodass insoweit auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

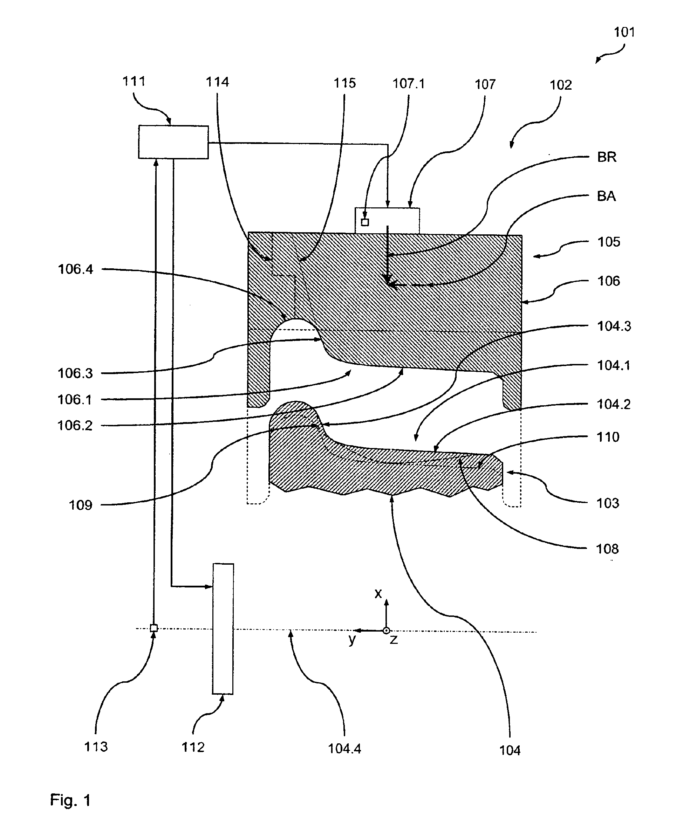

- Figur 1: eine schematische Schnittansicht eines Teils einer bevorzugten Ausführungsform des erfindungsgemäßen Schienenfahrzeugs mit einer bevorzugten Ausführungsform der erfindungsgemäßen Bearbeitungseinrichtung, mit welcher eine bevorzugte Ausführungsform des erfindungsgemäßen Bearbeitungsverfahrens durchgeführt werden kann;

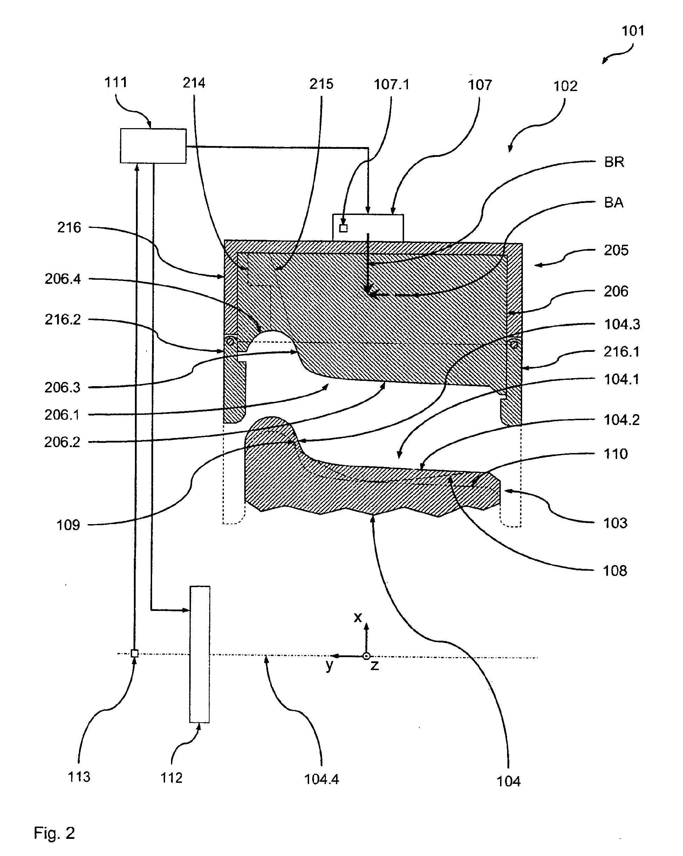

- Figur 2: eine schematische Schnittansicht eines Teils einer weiteren bevorzugten Ausführungsform des erfindungsgemäßen Schienenfahrzeugs mit einer weiteren bevorzugten Ausführungsform der erfindungsgemäßen Bearbeitungseinrichtung, mit welcher eine weitere bevorzugte Ausführungsform des erfindungsgemäßen Bearbeitungsverfahrens durchgeführt werden kann;
- Figur 3: eine schematische Schnittansicht eines Teils eines Schienenrades zur Erläuterung der verwendeten Bezeichnungen.

### Erstes Ausführungsbeispiel

Im Folgenden wird unter Bezugnahme auf die Figuren 1 und 3 ein bevorzugtes Ausführungsbeispiel des erfindungsgemäßen eines Schienenfahrzeugs 101 beschrieben.

Das Fahrzeug 101 umfasst einen (nicht dargestellten) Wagenkasten, der über eine Sekundärfederung auf einem Fahrwerk in Form eines Drehgestells 102 abgestützt ist. Es versteht sich jedoch, dass es sich bei anderen Varianten der Erfindung bei dem Fahrwerk 102 auch um ein Einzelachslaufwerk oder im Fahrzeugkasten geführte Radsätze handeln kann.

Das Drehgestell 102 umfasst eine Radeinheit 103 (beispielsweise einen Radsatz) mit einem Schienenrad 104. Auf der Radeinheit 103 ist ein (nicht näher dargestellter) Drehgestellrahmen über eine Primärfederung abgestützt.

Zum einfacheren Verständnis der nachfolgenden Erläuterungen ist in Figur 1 ein (durch die Radaufstandsebene des Drehgestells 102 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Das Schienenrad 104 weist eine Gleiskontaktfläche 104.1 auf, mit der sie im Betrieb des Fahrzeugs 101 die befahrene Schiene kontaktiert. Die Gleiskontaktfläche 104.1 unterteilt sich in einem Laufflächenabschnitt 104.2 im Bereich der Lauffläche des Schienenrades 104 und einen unmittelbar daran anschließenden Spurkranzabschnitt 104.3 im Bereich des Spurkranzes des Schienenrades 104.

An dem Drehgestellrahmen ist eine erfindungsgemäße Bearbeitungseinrichtung 105 befestigt, die dem Schienenrad 104 zugeordnet ist. Die Bearbeitungseinrichtung umfasst einen Kontaktkörper 106, der durch eine mit dem Drehgestellrahmen verbundene Betätigungseinheit 107 gehalten wird.

Der Kontaktkörper 106 umfasst eine Bearbeitungsfläche 106.1 mit einem Laufflächenbearbeitungsabschnitt 106.2 und einem Spurkranzbearbeitungsabschnitt 106.3. in einer die Drehachse 104.4 des Schienenrades 104 enthaltenden Ebene weist die Bearbeitungsfläche 106.1 eine Kontur auf, die der Soll-Geometrie bzw. Nenn-Geometrie der Gleiskontaktfläche 104.1 entspricht.

Der Kontaktkörper 106 ist in Figur 1 in seinem in Radialrichtung des Schienenrades 104 (die im gezeigten Beispiel der x-Richtung entspricht) von dem Schienenrad 104 entfernten Ruhezustand dargestellt. Über die Betätigungseinheit 107 kann der Kontaktkörper 106 in der Radialrichtung des Schienenrades 104 in einem Betriebszustand gebracht werden, in dem die Bearbeitungsfläche 106.1 die Gleiskontaktfläche 104.1 mit einer vorgebbaren, durch die Betätigungseinheit 107 eingestellten Flächenpressung flächig kontaktiert.

Der Kontaktkörper 106 ist im Bereich der Bearbeitungsfläche 106.1 aus einem hoch abrasiven Material gebildet, sodass er die Gleiskontaktfläche 104.1 abrasiv bearbeitet. Durch diese abrasive Bearbeitung der Gleiskontaktfläche 104.1 ist es zum einen möglich, einen im Bereich der Lauffläche entstandenen Verschleiß am Schienenrad 104, wie er durch die gestrichelte Kontur 108 angedeutet ist, ebenso auszugleichen, wie einen im Bereich des Spurkranzes entstandenen Verschleiß am Schienenrad 104, wie er durch die Kontur 109 angedeutet ist. Dabei wird durch den Kontaktkörper 106 stets wieder die Soll-Geometrie der Gleiskontaktfläche 104.1 hergestellt, wie dies durch die gestrichelte Kontur 110 angedeutet ist.

Dies hat zum einen den Vorteil, dass dank der Wiederherstellung der Soll-Geometrie der Gleiskontaktfläche 104.1 eine unter fahrdynamischen Gesichtspunkten optimale Rad-Schiene-Paarung wiederhergestellt wird. Hierdurch werden zum einen die eingangs beschriebenen, den Verschleiß noch weiter verstärkenden Verschleißbilder bzw. Verschleißmechanismen vermieden bzw. in gewissen Abständen kompensiert, sodass sich insgesamt ein verbessertes Verschleißverhalten mit längeren Standzeiten bzw. höheren Laufleistungen des Schienenrades 104 ergeben.

Zum anderen wird durch die Bearbeitung der Gleiskontaktfläche (insbesondere die damit einhergehende Verbesserung der Reibbedingungen sowie die Erwärmung) eine Verbesserung der Adhäsionsbedingungen zwischen Schienenrad 104 und Schiene erzielt, sodass sich das Traktionsverhalten verbessert und ein übermäßiger Verschleiß der Radlauffläche durch den großen Traktionsschlupf vermieden wird.

Der Kontaktkörper 106 weist weiterhin einen Kuppenbearbeitungsabschnitt 106.4 auf, der im Betriebszustand den Außenumfang des Spurkranzes umgreift. Hierdurch wird zum einen erreicht, dass durch die Bearbeitung auch die Spurkranzkuppe (am Außenumfang des Spurkranzes) wieder ihre Soll-Geometrie erhält.

Zudem wird im vorliegenden Beispiel durch dieses Umgreifen aufgrund des zur Radialrichtung des Schienenrades 104 geneigten Verlaufs des Spurkranzabschnitts 104.3 auch bei einer ausschließlich in Radialrichtung des Schienenrades 104 gerichteten (durch die Betätigungseinheit 107 aufgebrachten) Betätigungskraft BR eine im Axialrichtung (hier: y-Richtung) des Schienenrades 104 gerichtete Komponente der Kontaktkraft zwischen dem Kontaktkörper 106 und dem Schienenrad 104 erzielt. Mithin genügt es für eine zur Bearbeitung des Spurkranzes ausreichende Flächenpressung gegebenenfalls also, dass die Betätigungseinheit 107 eine rein in Radialrichtung des Schienenrades 104 gerichtete Betätigungskraft BR aufbringt.

Es versteht sich jedoch, dass gegebenenfalls auch vorgesehen sein kann, dass die Betätigungseinheit 107 zusätzlich auch noch eine in Axialrichtung des Schienenrades 104 gerichtete Betätigungskraftkomponente BA aufbringt, um eine ausreichende Bearbeitung des Spurkranzabschnitts 104.3 sicherzustellen. Auf eine seitliche Führung durch Führungselemente auf der Radinnenseite bzw. auf der Radaußenseite bzw. durch einen den Außenumfang des Spurkranzes umgreifenden Kuppenbearbeitungsabschnitt 106.4 des Kontaktkörpers 106 kann somit gegebenenfalls verzichtet werden.

Die Betätigungseinheit 107 umfasst eine Betätigungssteuereinheit 107.1, welche Beginn, Ende und Dauer der Betätigung des Kontaktkörpers 106 durch die Betätigungseinheit 107 steuert. Die Betätigungssteuereinheit ist hierzu mit einer Fahrzeugsteuerung 111 verbunden, welche ihrerseits mit einer Betriebsbremseinrichtung 112 des Radsatzes 103 das an die Schienenräder 104 aufgebrachte Antriebsmoment des Antriebes regelt sowie einer Kontrolleinheit 113 einer Kraftschlussregelung verbunden ist, welche das auf die Schienenräder 104 aufgebrachte Antriebsmoment des Antriebes regelt und/oder den Kraftschluss zwischen dem Schienenrad 104 und der Schiene überwacht. Zusätzlich oder alternativ kann die Betätigungssteuereinheit die Möglichkeit zur manuellen Eingabe von Signalen aufweisen.

Im vorliegenden Beispiel ist vorgesehen, dass die Fahrzeugsteuerung 111 ein entsprechendes Signal an die Betätigungssteuereinheit liefert, sobald ein bestimmter Reglereingriff der Kontrolleinheit 113 der Kraftschlussregelung eingeleitet wird bzw. ein Schlupfgrenzwert für den Schlupf zwischen dem Schienenrad 104 und der Schiene überschritten wird. Ist dies der Fall, betätigt die Betätigungseinheit 107 den Kontaktkörper 106 und drückt diesen gegen das Schienenrad 104, um die Adhäsionsbedingungen zu verbessern. Hierdurch wird mit anderen Worten erreicht, dass der Kontaktkörper 106 gerade bei Eingriffen des Kraftschlussreglers zum Einsatz kommt und somit die Gleiskontaktfläche 104.1 gerade dann korrigiert wird, wenn ein großer Laufflächenverschleiß vorliegt.

Die Notwendigkeit zur Reprofilierung des Schienenrades 104 kann dabei weiterhin durch periodische Sichtkontrollen und Profilmessungen oder durch andere geeignete Messsysteme im Drehgestell 102 oder im Fahrzeug 101 (z.B. optische Überwachung, Überwachung bestimmter Grenzwerte des Radprofils, Monitoring der Konizität des Radprofils, Überwachung der Grenzwerte der Drehgestell-Instabilität) festgestellt werden. Bei so festgestelltem Bedarf kann beispielsweise vorgesehen sein, dass die Betätigungssteuereinheit 107.1 über eine vorgebbare Laufleistung des Fahrzeugs 101 den Kontaktkörper 106 stets parallel zu den (in der Regel pneumatischen) Betriebsbremsen 112 oder einer elektrischen Bremse des Fahrzeugs 101 betätigt. Dies wird über die Steuereinrichtung 111 erfasst und entsprechend an die Betätigungssteuereinheit 107.1 weitergeleitet.

Die in der Steuereinrichtung 111 realisierte Kraftschlussregelung verhindert dabei ein Gleiten des Rades 104 auf den Schienen, indem im Betriebszustand des Kontaktkörpers 106 die Bremsleistung der elektrischen und/oder pneumatischen Bremsen bei Bedarf entsprechend reduziert werden.

Der Betrag der durch die Betätigungseinheit 107 erzeugten Kontaktkraft zwischen dem Kontaktkörper 106 und dem Schienenrad 104 ist im vorliegenden Beispiel so gewählt, dass sich eine für die zuverlässige Bearbeitung der Gleiskontaktfläche 104.1 ausreichende Flächenpressung ergibt. Hierbei wird vorzugsweise eine vergleichsweise geringe Flächenpressung gewählt, welche im Betrieb des Schienenfahrzeugs 101 insbesondere kein nennenswertes Bremsmoment erzeugt. Im vorliegenden Beispiel ist die Kontaktkraft so gewählt, dass die in dem Betriebszustand durch den Kontaktkörper 106 erzeugte Bremsleistung höchstens 10% bzw. höchstens 20% der auf das einzelne Schienenrad 104 bezogenen nominellen Bremsleistung der Bremsanlage des Schienenfahrzeugs 101 beträgt.

Die Betätigungssteuereinheit 107.1 protokolliert darüber hinaus zumindest die Dauer der Betätigung des Kontaktkörpers 106 und stellt diese Daten für eine spätere Auswertung, beispielsweise zur Bestimmung der verbleibenden Standzeit des Schienenrades 104 zur Verfügung.

Im vorliegenden Beispiel ist der Kontaktkörper 106 einteilig ausgebildet. Es versteht sich jedoch, dass der Kontaktkörper bei anderen Varianten der Erfindung auch mehrteilig ausgebildet sein kann, wie dies in Figur durch die Kontur 114 angedeutet ist.

Weiterhin versteht es sich, dass der Kontaktkörper bei anderen Varianten der Erfindung auch ohne einen Kuppenbearbeitungsabschnitt gestaltet sein kann, wie dies in Figur 1 durch die Kontur 115 angedeutet ist. Ebenso können Führungselemente zur seitlichen Führung (d. h. in y-Richtung) fehlen . In diesem Fall muss die Betätigungseinrichtung 107 dann jedoch stets eine axiale Kraftkomponente BA aufbringen, um eine Bearbeitung des Spurkranzabschnitts 104.3 sicherzustellen.

### Zweites Ausführungsbeispiel

Im Folgenden wird unter Bezugnahme auf die Figuren 2 und 3 ein weiteres bevorzugtes Ausführungsbeispiel der erfindungsgemäßen Bearbeitungseinrichtung 205 beschrieben, die in dem Schienenfahrzeug 101 anstelle der Bearbeitungseinrichtung 105 verwendet werden kann. Die Bearbeitungseinrichtung 205 entspricht in Aufbau und Funktion grundsätzlich der Bearbeitungseinrichtung 105, sodass hier lediglich auf die Unterschiede eingegangen werden soll. Insbesondere sind in Figur 2 gleichartige Bauteile mit um den Wert 100 erhöhten Bezugszeichen versehen. Sofern im Folgenden keine abweichenden Ausführungen gemacht werden, wird hinsichtlich der Merkmale dieser Komponenten ausdrücklich auf die obigen Ausführungen verwiesen.

Der wesentliche Unterschied der Bearbeitungseinrichtung 205 zu der Bearbeitungseinrichtung 205 besteht darin, dass der Kontaktkörper 206 in einem Halter 216 befestigt ist, der seinerseits durch die Betätigungseinheit 107 gehalten wird. Der Halter 216 umfasst jeweils ein gelenkig und federnd gelagertes seitliches Führungselement 216.1 und 216.2 an der Radaußenseite bzw. an der Radinnenseite, welche gewährleisten, dass der Kontaktkörper 206 stets an der richtigen Position auf das Schienenrad 104 aufgesetzt wird.

Die Führungselemente 216.1 und 216.2 sind jeweils mit einem Gleitstück ausgestattet, welches sich bei der Betätigung der Bearbeitungseinrichtung 205 an den Radrücken bzw. die Radkranzstirnfläche angelegt, sodass die Führungselemente keine nennenswerte Abnutzung des Schienenrades verursachen. Es versteht sich jedoch, dass bei weiteren Varianten der Erfindung vorgesehen sein kann, dass die Führungselemente 216.1 und 216.2 mittels eines scharnierartigen Gelenks an dem Halter 216 befestigt sind, welche erst nach dem Auflegen des Kontaktkörpers 206 auf das Schienenrad 104 in der in Figur 2 gezeigten Positionen einrasten, sodass die einseitige bzw. beidseitige Führung erst nach dem Auflegen des Kontaktkörpers 206 realisiert wird.

## Patentansprüche

1. Bearbeitungseinrichtung zur Bearbeitung der Gleiskontaktfläche eines Schienenrades eines Schienenfahrzeugs im Betrieb des Schienenfahrzeugs mit
- einem Kontaktkörper (106, 206), wobei
- der Kontaktkörper (106, 206) dazu ausgebildet ist, die Gleiskontaktfläche (104.1) in einem Betriebszustand über eine Bearbeitungsfläche (106.1; 206.1) flächig zu kontaktieren,
- die Bearbeitungsfläche (106.1; 206.1) einen Laufflächenbearbeitungsabschnitt (106.2; 206.2) aufweist, der einen Laufflächenabschnitt (104.2) der Gleiskontaktfläche (104.1) in dem Betriebszustand flächig kontaktiert,
- der Laufflächenbearbeitungsabschnitt (106.2; 206.2) insbesondere einer Soll-Geometrie des Laufflächenabschnitts (104.2) entsprechend gestaltet ist,
- die Bearbeitungsfläche (106.1; 206.1) einen Spurkranzbearbeitungsabschnitt (106.3; 206.3) aufweist, der im Bereich eines Spurkranzes des Schienenrades (104) einen Spurkranzabschnitt (104.3) der Gleiskontaktfläche (104.1) in dem Betriebszustand flächig kontaktiert,
- der Spurkranzbearbeitungsabschnitt (106.3; 206.3) einer Soll-Geometrie des Spurkranzabschnitts (104.3) entsprechend gestaltet ist,
- eine Betätigungseinheit (107) vorgesehen ist, die dazu ausgebildet ist, den Kontaktkörper (106; 206) in dem Betriebszustand mit dem Schienenrad (104) in Kontakt zu bringen und eine, insbesondere vorgebbare, Kontaktkraft zwischen dem Kontaktkörper (106; 206) und dem Schienenrad (104) zu erzeugen, und
- die Betätigungseinheit (107) eine Betätigungssteuereinheit (107.1) zur Steuerung der Betätigung des Kontaktkörpers aufweist, die dazu ausgebildet ist, Beginn und/oder Dauer und/oder Ende der Betätigung des Kontaktkörpers (106; 206) in Abhängigkeit von zeitlichen und/oder nicht-zeitlichen Ereignissen zu bestimmen, **dadurch gekennzeichnet, dass**
- die Betätigungssteuereinheit (107.1) dazu ausgebildet ist, Beginn und/oder Dauer und/oder Ende der Betätigung des Kontaktkörpers (106; 206) in Abhängigkeit von einem der Steuereinheit zugeführten Steuersignal eines Kraftschlussreglers einer Antriebsregelung des Schienenfahrzeugs zu bestimmen.

2. Bearbeitungseinrichtung nach Anspruch 1, **dadurch gekennzeichnet, dass**
- sich der Laufflächenbearbeitungsabschnitt (106.2; 206.2) in dem Betriebszustand in einer die Rotationssymmetrieachse des Schienenrades (104) enthaltenden Ebene im Wesentlichen über wenigstens 70% des Laufflächenabschnitts (104.2), vorzugsweise über wenigstens 90% des Laufflächenabschnitts (104.2), weiter vorzugsweise über im Wesentlichen 100% des Laufflächenabschnitts (104.2), erstreckt
und/oder
- sich der Spurkranzbearbeitungsabschnitt (106.3; 206.3) in dem Betriebszustand in einer die Rotationssymmetrieachse des Schienenrades (104) enthaltenden Ebene im Wesentlichen über wenigstens 70% des Spurkranzabschnitts (104.3), vorzugsweise über wenigstens 90% des Spurkranzabschnitts (104.3), weiter vorzugsweise über im Wesentlichen 100% des Spurkranzabschnitts (104.3), erstreckt

3. Bearbeitungseinrichtung nach Anspruch 1 oder 2, **dadurch gekennzeichnet, dass**
- der Laufflächenbearbeitungsabschnitt (106.2; 206.2) und der Spurkranzbearbeitungsabschnitt (106.3; 206.3) im Bereich eines Übergangsabschnitts aneinander angrenzen, wobei
- der Übergangsabschnitt einer Soll-Geometrie der Gleiskontaktfläche (104.1) in einem Übergang zwischen dem Laufflächenabschnitt (104.2) und dem Spurkranzabschnitt (104.3) entsprechend gestaltet ist.

4. Bearbeitungseinrichtung nach einem der vorhergehenden Ansprüche, **dadurch gekennzeichnet, dass**
- die Bearbeitungsfläche (106.1; 206.1) einen Kuppenbearbeitungsabschnitt (106.4) aufweist, wobei
- der Kuppenbearbeitungsabschnitt (106.4) in dem Betriebszustand einen Kuppenbereich an einem Außenumfang des Spurkranzes in einer die Rotationssymmetrieachse des Schienenrades (104) enthaltenden Ebene umgreift, wobei
- der Kuppenbearbeitungsabschnitt (106.4) den Spurkranz insbesondere flächig kontaktiert, insbesondere einer Soll-Geometrie des Spurkranzes in dem Kuppenbereich entsprechend gestaltet ist.

5. Bearbeitungseinrichtung nach einem der vorhergehenden Ansprüche, **dadurch gekennzeichnet, dass**
- der Kontaktkörper (106; 206) zumindest im Bereich der Bearbeitungsfläche (106.1; 206.1) ein hoch abrasives Material umfasst
und/oder
- der Kontaktkörper (106; 206) im Bereich der Bearbeitungsfläche (106.1; 206.1) mehrteilig gestaltet ist
und/oder
- mit dem Kontaktkörper (206) zur Führung relativ zu dem Schienenrad (104) wenigstens ein, insbesondere federnd gelagertes, Führungselement (216.1, 216.2) mit einem Gleitstück verbunden ist, wobei das wenigstens eine Führungselement (216.1, 216.2) zum Zusammenwirken seines Gleitstücks mit einer Radkranzstirnfläche des Schienenrads (104) und/oder einem Radrücken des Schienenrads (104) ausgebildet ist.

6. Bearbeitungseinrichtung nach einem der vorhergehenden Ansprüche, **dadurch gekennzeichnet, dass**
- die Betätigungseinheit (107) dazu ausgebildet ist, eine vorgebbare Kontaktkraft zwischen dem Kontaktkörper (106; 206) und dem Schienenrad (104) zu erzeugen.

7. Bearbeitungseinrichtung nach einem der vorhergehenden Ansprüche, **dadurch gekennzeichnet, dass**
- die Kontaktkraft zumindest eine, insbesondere vorgebbare, Radialkomponente in Radialrichtung des Schienenrades (104) aufweist
und/oder
- die Kontaktkraft zumindest eine, insbesondere vorgebbare, Axialkomponente in Axialrichtung des Schienenrades (104) aufweist.

8. Bearbeitungseinrichtung nach einem der vorhergehenden Ansprüche, **dadurch gekennzeichnet, dass**
- das Steuersignal ein für einen im Betrieb des Schienenfahrzeugs auftretenden Schlupf zwischen dem Schienenrad (104) und einer befahrenen Schiene repräsentatives Schlupfsignal ist, und
- die Betätigungssteuereinheit (107.1) insbesondere dazu ausgebildet ist, Beginn und/oder Dauer und/oder Ende der Betätigung des Kontaktkörpers (106; 206) in Abhängigkeit von der Überschreitung eines, insbesondere vorgebbaren, Grenzwertes des Steuersignals zu bestimmen.

9. Bearbeitungseinrichtung nach einem der vorhergehenden Ansprüche, **dadurch gekennzeichnet, dass**
- die Betätigungseinheit (107) eine Protokolliereinrichtung aufweist, wobei
- die Protokolliereinrichtung dazu ausgebildet ist, Beginn und/oder Dauer und/oder Ende der Betätigung des Kontaktkörpers (106; 206) und/oder wenigstens eine für die Kontaktverhältnisse, insbesondere die Kontaktkraftverhältnisse, während der Betätigung des Kontaktkörpers (106; 206) repräsentative Größe zu protokollieren.

10. Schienenfahrzeug mit
- einem Fahrwerk (102), das ein Schienenrad (104) umfasst, und
- einer dem Schienenrad (104) zugeordneten Bearbeitungseinrichtung (105; 205) nach einem der vorhergehenden Ansprüche.

11. Schienenfahrzeug nach Anspruch 10, **dadurch gekennzeichnet, dass**
- eine dem Schienenrad (104) zugeordnete Betriebsbremseinrichtung mit einer Bremssteuereinheit zur Steuerung des Abbremsens des Schienenfahrzeugs vorgesehen ist und
- die Bearbeitungseinrichtung (105; 205) eine Betätigungseinheit (107) mit einer Betätigungssteuereinheit (107.1) zur Steuerung der Betätigung des Kontaktkörpers (106; 206) aufweist, wobei
- die Bremssteuereinheit mit der Betätigungssteuereinheit (107.1) verbunden ist und
- die Bremssteuereinheit dazu ausgebildet ist, in Abhängigkeit von einem Betätigungssignal der Betätigungssteuereinheit (107.1) eine Bremsleistung der Betriebsbremseinrichtung einzustellen, insbesondere die Bremsleistung bei Betätigung des Kontaktkörpers (106; 206), insbesondere um einen vorgebbaren Betrag, zu reduzieren,
und/oder
- die Betätigungssteuereinheit (107.1) dazu ausgebildet ist, in Abhängigkeit von einem Bremssignal der Bremssteuereinheit Beginn und/oder Dauer und/oder Ende einer Betätigung des Kontaktkörpers (106; 206) zu bestimmen, insbesondere bei Vorliegen des Bremssignals eine Betätigung des Kontaktkörpers (106; 206) abzubrechen.

12. Verfahren zur Bearbeitung der Gleiskontaktfläche eines Schienenrades eines Schienenfahrzeugs im Betrieb des Schienenfahrzeugs, bei dem
- ein Kontaktkörper (106; 206) betätigt wird, um die Gleiskontaktfläche (104.1) in einem Betriebszustand über eine Bearbeitungsfläche (106.1; 206.1) flächig mit einer, insbesondere vorgebbaren, Kontaktkraft zu kontaktieren, wobei
- die Bearbeitungsfläche (106.1; 206.1) einen Laufflächenbearbeitungsabschnitt (106.2; 206.2) aufweist, der einen Laufflächenabschnitt (104.2) der Gleiskontaktfläche (104.1) in dem Betriebszustand flächig kontaktiert,
- der Laufflächenbearbeitungsabschnitt (106.2; 206.2) insbesondere einer Soll-Geometrie des Laufflächenabschnitts (104.2) entsprechend gestaltet ist,
- die Bearbeitungsfläche (106.1; 206.1) einen Spurkranzbearbeitungsabschnitt (106.3; 206.3) aufweist, der im Bereich eines Spurkranzes des Schienenrades (104) einen Spurkranzabschnitt (104.3) der Gleiskontaktfläche (104.1) in dem Betriebszustand flächig kontaktiert,
- der Spurkranzbearbeitungsabschnitt (104.3) einer Soll-Geometrie des Spurkranzabschnitts entsprechend gestaltet ist und
- Beginn und/oder Dauer und/oder Ende der Betätigung des Kontaktkörpers (106; 206) in Abhängigkeit von zeitlichen und/oder nicht-zeitlichen Ereignissen bestimmt wird,
**dadurch gekennzeichnet, dass**
- Beginn und/oder Dauer und/oder Ende der Betätigung des Kontaktkörpers (106; 206) in Abhängigkeit von einem im Betrieb des Schienenfahrzeugs auftretenden Steuersignal eines Kraftschlussreglers einer Antriebsregelung des Schienenfahrzeugs bestimmt wird.

13. Verfahren nach Anspruch 12, **dadurch gekennzeichnet, dass**
- die Kontaktkraft zumindest eine, insbesondere vorgebbare, Radialkomponente in Radialrichtung des Schienenrades (104) und/oder die Kontaktkraft zumindest eine, insbesondere vorgebbare, Axialkomponente in Axialrichtung des Schienenrades (104) aufweist,
und/oder
- Beginn und/oder Dauer und/oder Ende der Betätigung des Kontaktkörpers (106; 206) in Abhängigkeit von einem Schlupf zwischen dem Schienenrad (104) und einer befahrenen Schiene bestimmt wird,
und/oder
- Beginn und/oder Dauer und/oder Ende der Betätigung des Kontaktkörpers (106; 206) und/oder wenigstens eine für die Kontaktverhältnisse, insbesondere die Kontaktkraftverhältnisse, während der Betätigung des Kontaktkörpers (106; 206) repräsentative Größe protokolliert wird.

14. Verfahren nach Anspruch 12 oder 13, **dadurch gekennzeichnet, dass**
- in Abhängigkeit von einer Betätigung des Kontaktkörpers (106, 206) eine Bremsleistung einer Betriebsbremseinrichtung des Schienenfahrzeugs eingestellt wird, insbesondere die Bremsleistung bei Betätigung des Kontaktkörpers (106, 206), insbesondere um einen vorgebbaren Betrag, reduziert wird,
und/oder
- Beginn und/oder Dauer und/oder Ende einer Betätigung des Kontaktkörpers (106, 206) in Abhängigkeit von einer Betätigung der Betriebsbremseinrichtung bestimmt wird, insbesondere bei einer Betätigung der Betriebsbremseinrichtung eine Betätigung des Kontaktkörpers (106, 206) abzubrechen.

## Claims

1. Working device for working the track contact surface of a rail wheel of a rail vehicle during operation of the rail vehicle having
- a contact body (106, 206) wherein
- the contact body (106, 206) is configured to area-wise contact the track contact surface (104.1) over a working surface (106.1; 206.1) in one operating state,
- the working surface (106.1; 206.1) has a tread working section (106.2; 206.2) area-wise contacting a tread section (104.2) of the track contact surface (104.1) in the operating state,
- the tread working section (106.2; 206.2), in particular, is designed according to a desired geometry of the tread section (104.2),
- the working surface (106.1; 206.1) has a flange working section (106.3; 206.3), which area-wise contacts a flange section (104.3) of the track contact surface (104.1) in a region of a flange of the rail wheel (104) in the operating state,
- the flange working section (106.3; 206.3) is designed according to a desired geometry of the flange section (104.3),
- an actuator unit (107) is provided, which is configured to bring the contact body (106; 206) into contact with the rail wheel (104) in the operating state and to generate a contact force, in particular, a pre-selectable contact force, between the contact body (106; 206) and the rail wheel (104), and
- the actuator unit (107) has an actuator control unit (107.1) for controlling the actuation of the contact body, which is configured to determine the start and/or duration and/or end of the actuation of the contact body (106; 206) according to temporal and/or non-temporal events,
**characterised in that**
- the actuation control unit (107.1) is configured to determine start and/or duration and/or end of the actuation of the contact body (106; 206) according to a control signal of a traction controller of a drive control system of the rail vehicle provided to the control unit.

2. Working device according to claim 1, **characterised in that**
- in the operating state, the tread working section (106.2; 206.2), in a plane including the rotational symmetry axis of the rail wheel (104), extends substantially over at least 70% of the tread section (104.2), preferably over at least 90% of the tread section (104.2), more preferably over substantially 100% of the tread section (104.2),
and/or
- in the operating state, the flange working section (106.3; 206.3), in a plane including the rotational symmetry axis of the rail wheel (104), extends substantially over at least 70% of the flange section (104.3), preferably over at least 90% of the flange section (104.3), more preferably over substantially 100% of the flange section (104.3).

3. Working device according to claim 1 or 2, **characterised in that**
- the tread working section (106.2; 206.2) and the flange working section (106.3; 206.3) adjoin one another in the region of a transitional section, wherein
- the transitional section is designed according to a desired geometry of the track contact surface (104.1) in an intersection between the tread section (104.2) and the flange section (104.3).

4. Working device according to any one of the preceding claims, **characterised in that**
- the working surface (106.1; 206.1) has a dome working section (106.4), wherein
- in the operating state, in a plane including the rotational symmetry axis of the rail wheel (104), the dome working section (106.4) encompasses a dome region on an outer circumference of the flange, wherein
- the dome working section (106.4), in particular area-wise, contacts the flange, in particular, is designed according to a desired geometry of the flange in the dome region.

5. Working device according to any one of the preceding claims, **characterised in that**
- the contact body (106, 206), at least in the region of the working surface (106.1; 206.1), comprises a highly abrasive material
and/or
- the contact body (106; 206) is composed of several parts in the region of the working surface (106.1; 206.1)
and/or,
- for guidance relative to the rail wheel (104), at least one, in particular resiliently supported, guide element (216.1, 216.2) with a sliding member is connected to the contact body (206), wherein the at least one guide element (216.1, 216.2) is configured for the interaction of its sliding member with a flange front surface of the rail wheel (104) and/or reverse side of the rail wheel (104).

6. Working device according to any one of the preceding claims, **characterised in that**
- the actuation unit (107) is configured to generate a pre-selectable contact force between the contact body (106; 206) and the rail wheel (104).

7. Working device according to any one of the preceding claims, **characterised in that**
- the contact force has at least one, in particular pre-selectable, radial component in the radial direction of the rail wheel (104)
and/or
- the contact force has at least one, in particular pre-selectable, axial component in the axial direction of the rail wheel (104).

8. Working device according to any one of the preceding claims, **characterised in that**
- the control signal is a slip signal representative of a slip occurring during operation of the rail vehicle between the rail wheel (104) and a travelled track, and
- the actuation control unit (107.1), in particular, is configured to determine start and/or duration and/or end of the actuation of the contact body (106; 206) as a function of the exceeding of an, in particular pre-selectable, threshold value of the control signal.

9. Working device according to any one of the preceding claims, **characterised in that**
- the actuation unit (107) has a recording device, wherein
- the recording device is configured to record start and/or duration and/or end of the actuation of the contact body (106; 206) and/or at least one magnitude representative of the contact conditions, in particular, the contact force conditions during actuation of the contact body (106; 206).

10. Rail vehicle having
- a running gear (102), which comprises a rail wheel (104), and
- a working device (105; 205) according to any one of the preceding claims assigned to the rail wheel (104).

11. Rail vehicle according to claim 10, **characterised in that**
- a service brake device is provided, which is assigned to the rail wheel (104) and has a brake control unit for controlling the braking of the rail vehicle, and
- the working device (105; 205) has an actuation unit (107) with an actuation control unit (107.1) for controlling the actuation of the contact body (106; 206), wherein
- the brake control unit is connected to the actuation control unit (107.1) and
- the brake control unit is configured to adjust a braking power of the service brake device as a function of an actuation signal from the actuation unit (107.1), in particular, to reduce, in particular by a pre-selectable amount, the braking power upon actuation of the contact body (106; 206),
and/or
- the actuation control unit (107.1) is configured to determine start and/or duration and/or end of an actuation of the contact body (106; 206) as a function of a braking signal from the brake control unit, in particular, to stop an actuation of the contact body (106; 206) in the presence of braking signal.

12. Method for working the track contact surface of a rail wheel of a rail vehicle during the operation of said rail vehicle, in which
- a contact body (106; 206), in one operating state, is actuated in order to area-wise contact the track contact surface (104.1) over a working surface (106.1 ; 206.1) with an, in particular pre-selectable, contact force, wherein
- the working surface (106.1; 206.1) has a tread working section (106.2; 206.2) area-wise contacting a tread section (104.2) of the track contact surface (104.1) in the operating state,
- the tread working section (106.2; 206.2) is designed in particular, according to a desired geometry of the tread section (104.2),
- the working surface (106.1; 206.1) has a flange working section (106.3; 206.3), which evenly contacts a flange section (104.3) of the track contact surface (104.1) in the region of a flange of the rail wheel (104) in the operating state,
- the flange working section (104.3) is designed according to a desired geometry of the flange section and
- start and/or duration and/or end of the actuation of the contact body (106; 106) is determined according to temporal or temporal events,
**characterised in that**
- start and/or duration and/or end of the actuation of the contact body (106; 206) is determined according to a control signal from a traction controller of a drive control system of the rail vehicle occurring during operation of the rail vehicle.

13. Method according to claim 12, **characterised in that**
- the contact force has at least one, in particular pre-selectable, radial component in a radial direction of the rail wheel (104) and/or the contact force has at least one, in particular pre-selectable, axial component in the axial direction of the rail wheel (104),
and/or
- start and/or duration and/or end of the actuation of the contact body (106; 206) is determined according to a slip between the rail wheel (104) and a travelled track,
and/or
- start and/or duration and/or end of the actuation of the contact body (106; 206) and/or at least one magnitude representative of the contact conditions, in particular, the contact force conditions during the actuation of the contact body (106; 206), is recorded.

14. Method according to claim 12 or 13, **characterised in that**
- the braking power of a service brake device in the rail vehicle is adjusted as a function of an actuation of the contact body (106; 206), in particular, the braking power is reduced, in particular by a pre-selectable amount, upon actuation of the contact body (106, 206),
and/or
- start and/or duration and/or end of an actuation of the contact body (106; 206) is determined as a function of an actuation of the service brake device, in particular, to stop an actuation of the contact body (106; 206) upon actuation of the service brake device.

## Revendications

1. Dispositif de traitement pour le traitement de la surface de contact de voie d'une roue ferroviaire d'un véhicule ferroviaire en service avec
- un corps de contact (106, 206), où
- le corps de contact (106, 206) est conçu pour entrer en contact de manière étendue, dans un état d'opération, avec la surface de contact de voie (104.1) via une surface de traitement (106.1; 206.1),
- la surface de traitement (106.1; 206.1) présente une section de traitement de la bande de roulement (106.2; 206.2) qui est en contact de manière étendue avec une section de la bande de roulement (104.2) de la surface de contact de voie (104.1) dans l'état d'opération,
- la section de traitement de la bande de roulement (106.2; 206.2), en particulier, possède une forme correspondant à une géométrie de référence de la section de la bande de roulement (104.2),
- la surface de traitement (106.1; 206.1) présente une section de traitement du boudin de roue (106.3; 206.3) qui, dans la zone du boudin de la roue ferroviaire (104), est en contact de manière étendue avec une section de boudin de roue (104. 3) de la surface de contact de voie (104.1) dans l'état d'opération,
- la section de traitement du boudin de roue (106.3; 206.3) possède une forme qui correspond à une géométrie de référence de la section de boudin de roue (104.3),
- Il est prévu une unité d'actionnement (107) qui est conçue pour mettre en contact le corps de contact (106; 206) avec la roue ferroviaire (104) dans l'état d'opération et pour créer une force de contact, en particulier prédéfinissable, entre le corps de contact (106;206) et la roue ferroviaire (104), et
- l'unité d'actionnement (107) présente une unité de commande d'actionnement (107.1) pour commander l'actionnement du corps de contact, conçue pour déterminer le début et/ou la durée et/ou la fin de l'actionnement du corps de contact (106, 206) en fonction d'événements temporels et/ou non temporels,
**caractérisé en ce que**
- l'unité d'actionnement (107.1) est conçue pour déterminer le début et/ou la durée et/ou la fin de l'actionnement du corps de contact (106; 206) en fonction d'un signal de commande de régulateur d'adhérence d'un réglage de traction du véhicule ferroviaire transmis à l'unité de commande.

2. Dispositif de traitement selon la revendication 1, **caractérisé en ce que**
- la section de traitement de la bande de roulement (106.2; 206.2), dans l'état d'opération, dans un plan comprenant l'axe de symétrie de rotation de la roue ferroviaire (104), s'étend sur au moins 70 % de la section de la bande de roulement (104. 2), de préférence sur au moins 90% de la section de la bande de roulement (104.2), mieux encore sur essentiellement 100% de la section de la bande de roulement (104.2),
et/ou
- la section de traitement du boudin de roue (106.3; 206.3), dans l'état d'opération, dans un plan comprenant l'axe de symétrie de rotation de la roue ferroviaire (104), s'étend sur au moins 70 % de la section du boudin de roue (104.3), de préférence sur au moins 90% de la section du boudin de roue (104.2), mieux encore sur essentiellement 100% de la section du boudin de roue (104.3).

3. Dispositif de traitement selon la revendication 1 ou 2, **caractérisé en ce que**
l a section de traitement de la bande de roulement (106.2; 206.2) et la section de traitement du boudin de roue (106.3; 206.3) sont contiguës entre elles au niveau d'une section de transition, où
l a section de transition possède une forme qui correspond à une géométrie de référence de la surface de contact de voie (104.1) dans une transition entre la section de la bande de roulement (104.2) et la section du boudin de roue (104.3).

4. Dispositif de traitement selon l'une des revendications précédentes, **caractérisé en ce que**
l a surface de traitement (106.1; 206.1) présente une section de traitement du sommet (106.4), où
l a section de traitement du sommet (106.4), dans l'état d'opération, dans un plan comprenant l'axe de symétrie de rotation de la roue ferroviaire (104), enserre une zone de sommet au niveau du périmètre extérieur du boudin de roue où
l a section de traitement du sommet (106.4) est en contact avec le boudin de roue, en particulier de manière étendue, possède, en particulier, une forme correspondant à une géométrie de référence du boudin de roue dans la zone du sommet.

5. Dispositif de traitement selon l'une des revendications précédentes, **caractérisé en ce que**
- le corps de contact (106; 206), au moins dans la zone de la surface de traitement (106.1, 206.1), comprend un matériau fortement abrasif
et/ou
- le corps de contact (106; 206) est formé de plusieurs parties dans la zone de la surface de traitement (106.1; 206.1)
et/ou
- pour le guidage relatif à la roue ferroviaire (104), au moins un élément de guidage (216.1, 216.2) avec une coulisse, en particulier monté de manière élastique, est relié au corps de contact (206), où l'au moins un élément de guidage (216.1, 216.2) est conçu pour l'interaction de sa coulisse avec la surface frontale de la jante de la roue ferroviaire (104) et/ou avec le dos de la roue ferroviaire (104).

6. Dispositif de traitement selon l'une des revendications précédentes, **caractérisé en ce que**
- l'unité d'actionnement (107) est conçue pour créer une force de contact prédéfinissable entre le corps de contact (106; 206) et la roue ferroviaire (104).

7. Dispositif de traitement selon l'une des revendications précédentes, **caractérisé en ce que**
- a force de contact présente au moins une composante radiale, en particulier prédéfinissable, dans la direction radiale de la roue ferroviaire (104)
et/ou
- la force de contact présente au moins une composante axiale, en particulier prédéfinissable, dans la direction axiale de la roue ferroviaire (104).

8. Dispositif de traitement selon l'une des revendications précédentes, **caractérisé en ce que**
- le signal de commande est un signal de glissement représentatif d'un glissement survenant entre la roue ferroviaire (104) et un rail parcouru lorsque le véhicule ferroviaire est en service, et
- l'unité de commande de traitement (107.1) est conçue en particulier pour déterminer le début et/ou la durée et/ou la fin de l'actionnement du corps de contact (106; 206) en fonction du dépassement d'une valeur limite, en particulier prédéfinissable, du signal de commande.

9. Dispositif de traitement selon l'une des revendications précédentes, **caractérisé en ce que**
- l'unité d'actionnement (107) comporte une unité d'enregistrement, où
- l'unité d'enregistrement est conçu pour enregistrer le début et/ou la durée et/ou la fin de l'actionnement du corps de contact (106; 206) et/ou au moins une valeur représentative des conditions de contact, en particulier des conditions de force de contact, pendant fractionnement du corps de contact (106; 206).

10. Véhicule ferroviaire avec
- un train de roulement (102) qui comprend une roue ferroviaire (104) et
- un dispositif de traitement (105; 205) selon l'une des revendications précédentes associé à la roue ferroviaire (104).

11. Véhicule ferroviaire selon la revendication 10, **caractérisé en ce que**
- il est prévu un dispositif de freinage de service associé à la roue ferroviaire (104) et ayant une unité de commande de freinage pour la commande du freinage du véhicule ferroviaire, et
- l'unité de traitement (105; 205) présente une unité d'actionnement (107) avec une unité de commande d'actionnement (107.1) pour la commande de l'actionnement du corps de contact (106; 206), où
- l'unité de commande de freinage est reliée à l'unité de commande d'actionnement (107.1) et
- l'unité de commande de freinage est conçue pour contrôler, en fonction d'un signal d'actionnement de l'unité de commande d'actionnement (107.1), une puissance de freinage du dispositif de freinage de service, en particulier, pour réduire la puissance de freinage lors de l'actionnement du corps de contact (106; 206), en particulier dans une mesure prédéfinissable,
et/ou
- l'unité d'actionnement (107.1) est conçue pour déterminer, en fonction du signal de freinage de l'unité de commande de freinage, le début et/ou la durée et/ou la fin de l'actionnement du corps de contact (106; 206), en particulier, pour interrompre l'actionnement du corps de contact (106; 206) en présence d'un signal de freinage.

12. Procédé de traitement de la surface de contact de voie d'une roue ferroviaire d'un véhicule ferroviaire en service, lors duquel
- un corps de contact (106; 206) est actionné pour entrer en contact de manière étendue, dans un état d'opération, avec la surface de contact de voie (104.1) par le biais d'une surface de traitement (106.1; 206.1), avec une force de contact, en particulier prédéfinissable, où
- la surface de traitement (106.1; 206.1) présente une section de traitement de la bande de roulement (106.2; 206.2) qui est en contact de manière étendue avec une section de la bande de roulement (104. 2) de la surface de contact de voie (104.1) dans l'état d'opération,
- la section de traitement de la bande de roulement (106.2; 206.2), en particulier, est formée de manière correspondante à une géométrie de référence de la section de la bande de roulement (104.2),
- la surface de traitement (106.1; 206.1) présente une section de traitement du boudin de roue (106.3; 206. 3) qui, dans la zone d'un boudin de la roue ferroviaire (104), est en contact de manière étendue avec une section de boudin de roue (104. 3) de la surface de contact de voie (104.1) dans l'état d'opération,
- la section de traitement du boudin de roue (104. 3) est formée de manière correspondante à une géométrie de référence de la section de boudin de roue, et
- le début et/ou la durée et/ou la fin de fractionnement du corps de contact (106; 206) sont déterminés en fonction d'événements temporels et/ou non temporels
**caractérisé en ce que**
- le début et/ou la durée et/ou la fin de fractionnement du corps de contact (106; 206) est déterminé(e) en fonction d'un signal de commande d'un régulateur d'adhérence d'un réglage de traction du véhicule ferroviaire survenant pendant l'opération du véhicule ferroviaire.

13. Procédé selon la revendication 12, **caractérisé en ce que**
- la force de contact présente au moins une composante radiale, en particulier prédéfinissable, dans la direction radiale de la roue ferroviaire (104) et/ou la force de contact présente au moins une composante axiale, en particulier prédéfinissable, dans la direction axiale de la roue ferroviaire (104),
et/ou
- le début et/ou la durée et/ou la fin de l'actionnement du corps de contact (106; 206) est déterminé(e) en fonction d'un glissement entre la roue ferroviaire (104) et un rail parcouru,
et/ou
- le début et/ou la durée et/ou la fin de l'actionnement du corps de contact (106; 206) et/ou au moins une valeur représentative des conditions de contact pendant factionnement du corps de contact (106; 206), en particulier des conditions de force de contact, est enregistré(e).

14. Procédé selon la revendication 12 ou 13, **caractérisé en ce que**
- une puissance de freinage d'un dispositif de freinage de service du véhicule ferroviaire est contrôlée en fonction de fractionnement du corps de contact (106, 206), en particulier, la puissance de freinage est diminuée lors de l'actionnement du corps de contact (106; 206), en particulier dans une mesure prédéfinissable,
et/ou
- le début et/ou la durée et/ou la fin de l'actionnement du corps de contact (106; 206) sont déterminés en fonction de l'actionnement du dispositif de freinage de service, en particulier pour interrompre l'actionnement du corps de contact (106, 206) lors de fractionnement du dispositif de freinage de service.
